# EUROPÄISCHE PATENTSCHRIFT

(11) **EP 3 459 816 B1**
(45) Veröffentlichungstag und Bekanntmachung des Hinweises auf die Patenterteilung: **04.11.2020**
(21) Anmeldenummer: 18196172.3
(22) Anmeldetag: 24.09.2018
(51) Int. Cl.: B62B 5/00, B62B 3/00, B62B 3/02

(54) **ROLLWAGEN**
TROLLEY
CHARIOT

(30) Priorität: 25.09.2017 DE 202017105784 U
(43) Veröffentlichungstag der Anmeldung: 27.03.2019
(73) Patentinhaber: LKE Gesellschaft für Logistik- und Kommunikations- Equipment mbH, 45768 Marl (DE)
(72) Erfinder: EILDERS, Joachim, 45529 Hattingen (DE); BEELE, Peter, 59929 Brilon (DE)
(74) Vertreter: Rausch Wanischeck-Bergmann Brinkmann

(56) Entgegenhaltungen:
- DE-U1-202005 017 755
- FR-A1- 2 432 416
- US-A- 1 446 400
- US-A- 3 233 644
- US-B1- 9 205 951

## Beschreibung

Die Erfindung betrifft einen Rollwagen, insbesondere Rollcontainer, zur Aufnahme von Stückgut, mit einer eine Mehrzahl von Rollen aufweisenden Bodenbaugruppe und einem von der Bodenbaugruppe getragenen Gestell, wobei das Gestell zumindest ein Seitenwandelement mit einem aus Metallblech gebildeten Flächenelement aufweist, wobei das Gestell zwei benachbarte und sich jeweils in Höhenrichtung des Rollwagens erstreckende Pfosten aufweist, zwischen denen sich das Flächenelement erstreckt, wobei die Pfosten zusammen mit dem Flächenelement das Seitenwandelement bilden.

Rollwagen der eingangs genannten Art sind aus dem Stand der Technik an sich gut bekannt, weshalb es eines gesonderten druckschriftlichen Nachweises an dieser Stelle dem Grunde nach nicht bedarf. Es sei deshalb auch nur exemplarisch auf die DE 20 2015 006 120 U1 verwiesen, die einen gattungsgemäßen Rollwagen zeigt.

Rollwagen der vorbekannten Art dienen der Aufnahme und dem Transport von Stückgut, bei dem es sich beispielsweise um Frachtsendungen, Postpakete und/oder dgl. handeln kann. Der Rollwagen verfügt über eine Bodenbaugruppe, die unterseitig mit einer Mehrzahl von Tragrollen ausgestattet ist. Diese Tragrollen ermöglichen ein Verfahren des Rollwagens, wobei die Tragrollen entweder als lenkbare oder als nicht-lenkbare Tragrollen ausgebildet sein können.

Die Bodenbaugruppe stellt auf ihrer den Rollen abgewandten Oberseite eine Aufnahmefläche zur Aufnahme der Stückgüter bereit. Im bestimmungsgemäßen Verwendungsfall können die zur Aufnahme durch den Rollwagen bestimmten Stückgüter auf der Bodenbaugruppe abgestellt und dort ggf. aufgestapelt werden.

Der Rollwagen verfügt des Weiteren über ein Gestell, das von der Bodenbaugruppe getragen ist. Dieses Gestell verfügt über zumindest ein Seitenwandelement mit einem aus Metallblech gebildeten Flächenelement. Gemäß einer typischen Bauform sind zwei benachbarte und sich jeweils in Höhenrichtung des Rollwagens erstreckende Pfosten vorgesehen, zwischen denen sich das Flächenelement erstreckt. Dabei bilden die beiden Pfosten zusammen mit dem sich zwischen den Pfosten erstreckenden Flächenelement das Seitenwandelement. Neben den Pfosten und dem Flächenelement kann das Seitenwandelement auch noch über weitere Bestandteile und/oder Baukomponenten verfügen, je nach Ausgestaltung des Rollwagens.

Für einen verwenderseitigen Zugriff auf den vom Gestell des Rollwagens umgebenen Volumenraum ist eine vom Gestell bereitgestellte Zugangsöffnung vorgesehen. Durch diese Zugangsöffnung hindurch kann eine Beladung des Rollwagens bzw. eine Entladung desselben mit Stückgut stattfinden. Diese Zugangsöffnung ist typischerweise zwischen zwei Seitenwandelementen bzw. den Pfosten dieser Seitenwandelemente ausgebildet.

Um einen sicheren Transport der vom Rollwagen aufgenommenen Stückgüter zu garantieren, ist die Zugangsöffnung typischerweise verschließbar ausgebildet, zu welchem Zweck eine Plane, Gurtbänder und/oder dgl. vorgesehen sind. Diese Plane, Gurtbänder und/oder dgl. dienen der verwenderseitigen wahlweisen Abdeckung der Zugangsöffnung. Dabei ist die Zugangsöffnung in Gebrauchsstellung der Plane, der Gurtbänder und/oder dgl. verschlossen, so dass ein ungewolltes Herausfallen der vom Rollwagen bevorrateten Stückgüter durch die Zugangsöffnung hindurch verhindert ist. In der Nicht-Gebrauchsstellung der Plane, der Gurtbänder und/oder dgl. ist die Zugangsöffnung zumindest teilweise freigegeben, so dass ein verwenderseitiger Zugriff auf den vom Gestell des Rollwagens bereitgestellten Volumenraum und damit auch auf die davon aufgenommenen Stückgüter ermöglicht ist.

Es ist aus dem Stand der Technik gemäß der DE 196 30 483 A1 des Weiteren ein Wagen zum Ziehen von Hand oder als Anhänger bekannt, der insbesondere dazu dienen soll, Kinder transportieren zu können. Dabei soll der Wagen für einen kindgerechten Transport Polsterungen und Gurte aufweisen sowie über Ecken und Kanten verfügen, die zumindest teilweise abgerundet sind. Um einen einfachen Transport des Wagens beispielsweise mit einem PKW zu ermöglichen, ist dieser zusammenfaltbar ausgebildet. Es wird in diesem Zusammenhang mit der DE 196 30 483 A1 vorgeschlagen, dass die Seitenwände des Wagens aus scharnierbaren Wandelementen gebildet sind, so dass diese nach Art einer Ziehharmonika zusammengelegt werden können.

Aus der DE 198 21 434 A1 ist ferner eine Vorrichtung zum Transport von stückigem Gut in Form einer Transportbox bekannt. Die Transportbox verfügt über ein auf Rollen oder Kufen bewegbares Gehäuse, welches zwei mit regelmäßig verteilt angeordneten Öffnungen versehene Seitenwände, einen Boden und eine Ladewand aufweist. Dabei ist die Ladewand um eine nahe dem Boden und parallel zu diesem angeordnete Schwenkachse aus einer Schließstellung in eine Beladestellung verschwenkbar. Die vertikal ausgerichteten Kanten der äußeren Ecken der Transportbox können jeweils mit einem Kantenschutz ausgerüstet sein, der aus einem elastischen Material hergestellt ist und einen von der Kante frei in den Raum stehenden Schlaufenabschnitt aufweist. Bei Berührung mit einem anderen Gegenstand legt sich der ansonsten freistehende Schlaufenabschnitt an die zu schützende Seitenfläche der Transportbox an und bildet so ein mehrlagiges weiches Polster durch das ein Zerkratzen oder eine sonstige Beschädigung des Gegenstandes sicher vermieden ist.

Aus der DE 20 2014 009 821 U1 ist ein Transportroller für insbesondere sperrige Möbel bekannt. Dieser Transportroller verfügt über zwei miteinander gekoppelte Gummimatten, deren äußeren Vertikalkanten mit einem Kantenschutz ausgerüstet sein können.

Die DE 20 2005 017 755 U1 offenbart einen Transportwagen mit einer Mehrzahl von Laufrollen und mit einem Rahmen, an dem mindestens zwei Tragwangen für die Lagerung von Einlageelementen zwischen diesen befestigt sind. Eine Tragwange weist ein Strangpressprofil auf, welches zweiteilig oder mehrteilig ausgebildet ist.

Aus der US 9,205,951 B1 ist ein Transportwagen für Papierdokumente bekannt. Der Wagen verfügt über rechteckige innere und äußere Behälter mit offener Oberseite, die so dimensioniert sind, dass sie ineinander greifen. Zur Aufnahme von Dokumententaschen sind an den Behältern angeordnete Tragleisten vorgesehen.

Die US 3,233,644 A zeigt einen verfahrbaren Wäschekorb, der an seiner oberen Randkante eine umlaufende Aufpolsterung aufweist.

Aus der FR 2,432,416 A1 ist eine Schubkarre bekannt, die über einen Schubkarrenkörper mit umgebördelter Randkante verfügt.

Aus der US 1,446,400 A ist ein Korb bekannt, der aus einem Traggestell und einem davon aufgenommenen Beutel aus Stoff gebildet ist.

Obgleich sich die vorbeschriebene Konstruktion eines Rollwagens im alltäglichen Praxiseinsatz bewährt hat, besteht Verbesserungsbedarf, insbesondere mit Blick auf eine weiter vereinfachte Handhabung. Es ist deshalb die Aufgabe der Erfindung, einen gattungsgemäßen Rollwagen dahingehend weiterzuentwickeln, dass eine verwenderseitige Vereinfachung in der Handhabung bei gleichzeitiger Verbesserung der Verwendungssicherheit erreicht ist.

Zur **Lösung** dieser Aufgabe wird mit der Erfindung gemäß Anspruch 1 ein gattungsgemäßer Rollwagen vorgeschlagen, der sich dadurch auszeichnet, dass das Flächenelement an einer der Bodenbaugruppe abgewandten, oberen Randkante mit einem Kantenschutz ausgerüstet ist, wobei das Flächenelement und der Kantenschutz einstückig ausgebildet sind, wobei der Kantenschutz dadurch ausgebildet ist, dass das Flächenelement umgekantet ausgebildet ist, wobei das Flächenelement einfach umgekantet ist und einen Randabschnitt aufweist, in dem das Flächenelement zweilagig ausgebildet ist, wobei der Randabschnitt bündig mit der oberen Kante der Pfosten und/oder einem zwischen den Pfosten angeordneten Querbalken abschließt..

Die Praxis hat gezeigt, dass Verwender trotz vorhandener Zugangs- bzw. Beschickungsöffnung eine Beladung des Rollwagens dadurch vornehmen, dass in den Rollwagen zu überführende Stückgüter dem nach oben offenen Rollwagen von oben aufgegeben werden, indem sie über die Seitenwände gehoben und dann fallengelassen werden. Diese Vorgehensweise bei der Beladung des Rollwagens ist insbesondere dem verwenderseitigen Wunsch eines möglichst schnellen Beladevorgangs geschuldet. Denn bei einer Bestückung des Rollwagens über die Seitenwände hinüber entfällt der verwenderseitig häufig als lästig empfundene Vorgang, die Zugangsöffnung durch Überführen der Plane, der Spanngurte und/oder dgl. In die Nicht-Gebrauchsstellung freizugeben. Es entfällt ferner der Handhabungsvorgang des anschließenden Wiederverschließens der Zugangsöffnung durch Überführen der Plane, der Spanngurte und/oder dgl. zurück in die Gebrauchsstellung. Das Bestücken des Rollwagens über die obere Randkante der Seitenwände hinweg dient also allein dazu, beim Beladen des Rollwagens Zeit einsparen zu können.

Die Beladung des Rollwagens über die obere Randkante der Seitenwände hinweg hat den Nachteil, dass zu Lasten eines Verwenders ein erhebliches Verletzungsrisiko besteht. Dies insbesondere deshalb, weil die obere Randkante der aus Metallblech gebildeten Flächenelemente herstellungsbedingt scharfkantig ist. Je nach Bauhöhe des Rollwagens kann es bei einer Bestückung des Rollwagens über die obere Randkante der Seitenwände hinweg dazu kommen, dass der Verwender mit seinen Unterarmen, seinen Handgelenken und/oder seinen Händen an der scharfkantigen oberen Randkante der Flächenelemente vorbeischrammt und es infolge dessen zu Verletzungen, insbesondere Schnittverletzungen und/oder Abschürfungen kommt.

Dieses Verletzungsrisiko gilt es zu minimieren, weshalb mit der Erfindung vorgeschlagen wird, dass das Flächenelement einer der Bodenbaugruppe abgewandten, oberen Randkante mit einem Kantenschutz ausgerüstet ist.

Sinn und Zweck des erfindungsgemäß vorgesehenen Kantenschutzes ist es, die obere Randkante des Flächenelementes derart auszurüsten, dass ein verwenderseitiger Kontakt infolge beispielsweise eines Vorbeischrammens mit dem Unterarm, dem Handgelenk und/oder der Hand nicht zu Abschürfungen oder Schneidverletzungen führt. Es ist so eine schnelle Beladung des Rollwagens über die Seitenwände des Rollwagens hinweg mit minimiertem Verletzungsrisiko möglich, so dass eine vereinfachte Handhabung bei gleichzeitiger Verbesserung der Betriebssicherheit erreicht ist.

Das Vorsehen eines Kantenschutzes an sich ist aus dem Stand der Technik nicht unbekannt. So zeigen beispielsweise die eingangs genannte DE 20 2014 009 821 U1 und die DE 198 21 434 A1 jeweils einen Transportroller beziehungsweise eine Transportvorrichtung, die mit einem Kantenschutz ausgerüstet sein kann. Diese vorbekannten Konstruktionen betreffen einen Kantenschutz für vertikal ausgerichtete Kanten, dessen Sinn und Zweck darin besteht, im Kollisionsfall eine Beschädigung des Transportrollers beziehungsweise der Transportvorrichtung und/oder des Kollisionsobjektes zu minimieren. Der nach der Erfindung vorgesehene Kantenschutz dient indes nicht dem Schutz des Rollwagens im Kollisionsfall, weshalb der nach der Erfindung vorgesehene Kantenschutz auch nicht an vertikal ausgerichteten Kanten des Rollwagens angeordnet ist. Erfindungsgemäß ist vielmehr vorgesehen, dass das Flächenelement an einer der Bodenbaugruppe angewandten, oberen Randkante mit einem Kantenschutz ausgerüstet ist, der Kantenschutz mithin horizontal verläuft, und zwar entlang der oberen Randkante des zugehörigen Flächenelements. Denn der Sinn und Zweck des erfindungsgemäßen Kantenschutzes liegt darin, bei einer unsachgemäßen, in der Praxis aber immer wieder vorkommenden Handhabung des Rollwagens dafür Sorge zu tragen, dass das Verletzungsrisiko eines über die obere Randkante des Flächenelements greifenden Verwenders minimiert ist.

Erfindungsgemäß ist vorgesehen, dass der Kantenschutz dadurch ausgebildet ist, dass das Flächenelement umgekantet ist. Das Flächenelement und der Kantenschutz sind mithin einstückig ausgebildet. Typischerweise wird das das Flächenelement bildende Metallblech durch Stanzen hergestellt. Ohne nennenswerten Herstellungsmehraufwand kann während des Stanzvorgangs oder im Anschluss daran eine Umkantung des Metallblechs vorgenommen werden, und zwar zumindest an der Randkante des Metallblechs, die im späteren Verwendungsfall die obere Randkante darstellt. Durch diese Abkantung wird eine gratfreie und auch keine scharfen Übergänge bereitstellende Abschlusskante erzeugt. Dabei erfolgt die Abkantung durch einfaches Umbiegen, womit sich ein die Abschlusskante bereitstellender Biegeradius ergibt, der wenigstens der einfachen Blechstärke entspricht. Es wird so eine abgerundete Abschlusskante bereitgestellt, die sich in einfacher Weise und kostengünstig herstellen lässt, und die das Verletzungsrisiko im bestimmungsgemäßen Verwendungsfall deutlich reduzieren hilft.

Das Flächenelement ist einfach umgekantet. Bei einer einfachen Umkantung ergibt sich ein Randabschnitt, in dem das Flächenelement zweilagig ausgebildet ist. Bei einer zweifachen Umkantung ergibt sich dementsprechend ein Randabschnitt, in dem das Flächenelement dreilagig ausgebildet ist. Dabei bestimmt die Anzahl der Umkantungen den späteren Biege- oder Verrundungsradius der Abschlusskante des Flächenelementes.

Der Randabschnitt kann gemäß einem weiteren Merkmal der Erfindung abgewinkelt ausgebildet sein. Diese Abwinklung kann in Abhängigkeit der Anzahl der Umkantungen vorgesehen sein, um ein flächenbündiges Anliegen des Flächenelementes an zugehörigen Pfosten eines Seitenwandelementes über die gesamte Höhenerstreckung zu ermöglichen.

Erfindungsgemäß ist vorgesehen, dass der Randabschnitt des Flächenelementes bündig mit der oberen Kante der Pfosten und/oder einem zwischen den Pfosten angeordneten Querbalken abschließt. Es werden so nach oben überstehende Kanten und/oder Fortsätze vermieden, was ebenfalls der Sicherheit und damit der Minimierung des Verletzungsrisikos dient.

Der die Umkantung aufweisende Randabschnitt des Flächenelementes kann in seiner Höhenerstreckung dem Grunde nach in beliebiger Weise ausgebildet werden. Bevorzugt ist indes aus Gründen des verringerten Materialeinsatzes, dass die Umkantung möglichst gering ausfällt. Andererseits muss aber eine solche Umkantung erreicht werden, dass ein hinreichender Sicherheitsschutz gegeben ist. Vor diesem Hintergrund hat sich herausgestellt, dass der Randabschnitt eine Erstreckung bevorzugterweise in Höhenrichtung des Flächenelementes von 0,5 cm bis 15 cm, vorzugsweise von 1 cm bis 10 cm, noch mehr bevorzugt von 2 cm bis 7 cm sowie am meisten bevorzugt von 3 cm bis 5 cm aufweist.

Alternativ und nicht erfindungsgemäß ist vorgesehen, dass der Kantenschutz ein zum Flächenelement separates Bauteil ist. Dieses Bauteil ist im bestimmungsgemäßen Verwendungsfall auf die obere Randkante des Flächenelementes aufgesetzt. Demnach ist keine einstückige Ausgestaltung von Flächenelement und Kantenschutz, sondern vielmehr eine zweistückige Ausgestaltung vorgesehen. Diese Ausgestaltung ermöglicht, den Kantenschutz auch aus einem anderen Material ausbilden zu können, beispielsweise Kunststoff. Zudem kann ein separat zum Flächenelement ausgebildeter Kantenschutz nachgerüstet werden, so dass auch Bestands-Rollwagen mit einem entsprechenden Kantenschutz ausgestattet werden können.

Der Kantenschutz kann eine aus Metallblech gebildete Klemmschiene sein. Aufgrund der federelastischen Ausgestaltung einer solchen nach Art einer Klammer ausgebildeten Klemmschiene bedarf es zur Anordnung der Klemmschiene am Metallblech keiner zusätzlichen Fixier- und/oder Rastmittel. Die Schenkel der Klemmschiene werden im Montagefall leicht gespreizt, so dass ein Aufsetzen der Klemmschiene auf das Metallblech gestattet ist. Die durch die Schenkel der Klammer bzw. Schiene bewirkte federelastische Anpresskraft sorgt nach einer Montage für ein sicheres Halten der Klemmschiene am Metallblech.

Um eine ungewollte Demontage beispielsweise durch Diebstahl zu vermeiden, ist gemäß einem weiteren Merkmal der Erfindung vorgesehen, dass die Klemmschiene am Flächenelement unverlierbar angeordnet ist. Dies kann beispielsweise durch Verschweißen von Klemmschiene und Metallblech erreicht werden.

Gemäß einem weiteren Merkmal der Erfindung ist vorgesehen, dass sich der Kantenschutz zumindest abschnittsweise zwischen den beiden Pfosten entlang der oberen Randkante des Flächenelements erstreckt. Demnach ist also vorgesehen, dass das Flächenelement nicht über seine gesamte Breite mit einem Kantenschutz ausgerüstet ist. Insbesondere die Eckbereiche des Flächenelementes, in denen die Pfosten angeordnet sind, bleiben frei. Diese Ausgestaltung hat insbesondere Montagevorteile, denn es ist ein Toleranzausgleich geschaffen. Insbesondere bei einem zur Ausbildung des Kantenschutz umgekanteten Metallblechs können Toleranzen in Breitenrichtung auf diese Weise ausgeglichen werden.

Weitere Merkmale und Vorteile der Erfindung ergeben sich aus der nachfolgenden Beschreibung anhand der Figuren. Dabei zeigen
- Fig. 1: in schematisch perspektivischer Ansicht von vorne einen erfindungsgemäßen Rollwagen;
- Fig. 2: in schematisch perspektivischer Ansicht von hinten den Rollwagen nach Fig. 1;
- Fig. 3: in schematisch perspektivischer Ansicht den erfindungsgemäßen Rollwagen in einer Zwischenstellung;
- Fig. 4: in schematischer Perspektivdarstellung den erfindungsgemäßen Rollwagen in einer Transportstellung;
- Fig. 5: in schematisch perspektivischer Ansicht ein Flächenelement;
- Fig. 6: in einer schematisch perspektivischen Detailansicht das Flächenelement nach Fig. 5; und
- Fig. 7: in einer rein schematischen Schnittdarstellung die obere Randkante eines Flächenelementes nach der Erfindung.

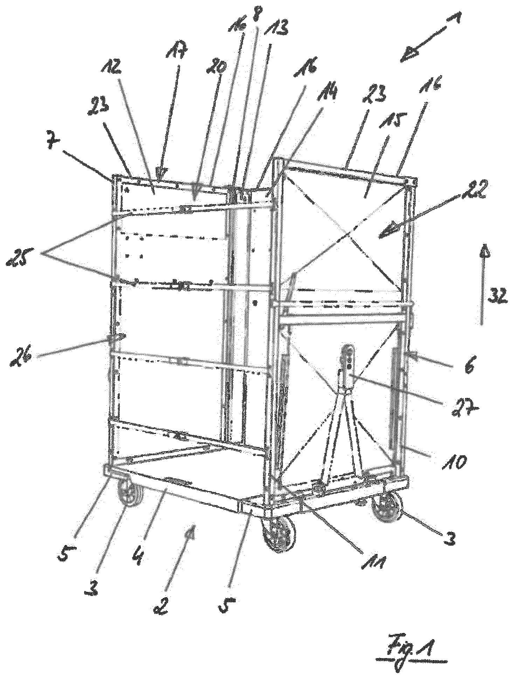

Die Figuren 1 bis 4 lassen jeweils in unterschiedlichen Ansichten einen Rollwagen 1 nach der Erfindung erkennen.

Der Rollwagen 1 verfügt über eine Bodenbaugruppe 2, die von vier Rollen 3 getragen ist, wobei aufgrund der perspektivischen Darstellung in Fig. 1 nur drei der vier Rollen 3 zu erkennen sind.

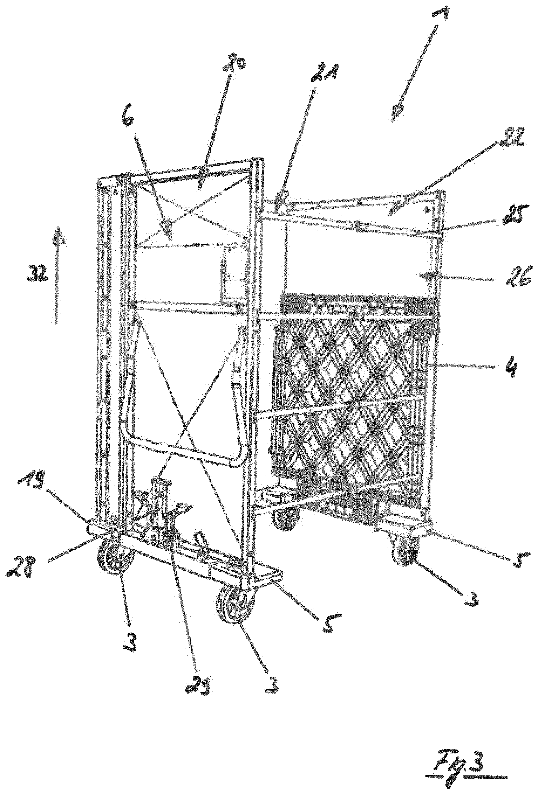

Die Bodenbaugruppe 2 stellt zwei Träger 5 bereit, die jeweils einendseitig an einem gemeinsamen Holm 19 angeordnet sind, womit sich insgesamt eine U-förmige Ausgestaltung ergibt, wie insbesondere eine Zusammenschau der Figuren 1, 2 und 3 erkennen lässt. Die Bodenbaugruppe 2 verfügt des Weiteren über ein Bodenteil 4, das verschwenkbar an einem der beiden Träger 5 angeordnet ist. Im gezeigten Ausführungsbeispiel ist das Bodenteil 4 an dem mit Bezug auf die Zeichnungsebene nach den Figuren 1 und 3 rechten Träger 5 verschwenkbar angeordnet, so dass das Bodenteil 4 aus einer Gebrauchsstellung, die in Fig. 1 dargestellt ist, in eine hochgeklappte, Nicht-Gebrauchsstellung verbracht werden kann, wie diese in Fig. 3 dargestellt ist. Das Bodenteil 4 ist mithin verschwenkbar an dem einen Träger 5 angeordnet und liegt in Gebrauchsstellung randseitig auf dem anderen Träger 5 auf. Verwenderseitig kann das Bodenteil wahlweise verschwenkt und so aus der Gebrauchsstellung in die Nicht-Gebrauchsstellung und umgekehrt überführt werden.

Der Rollwagen 1 verfügt des Weiteren über ein Gestell 6, das von der Bodenbaugruppe 2 getragen ist. Im gezeigten Ausführungsbeispiel verfügt das Gestell 6 über drei Seitenwandelemente 20, 21 und 22. Dabei ist das Seitenwandelement 20 vom ersten Träger 5, das zweite Seitenwandelement 21 vom Holm 19 und das dritte Seitenwandelement 22 vom zweiten Träger 5 getragen.

Mit Bezug auf die frontseitige Ansicht nach Fig. 1 ist zu erkennen, dass der Rollwagen 1 vorderseitig, d.h. der hinteren Seitenwand 21 gegenüberliegend offen ausgebildet ist, womit eine Beschickungs- bzw. Zugangsöffnung 26 gegeben ist. Im Transportfall lässt sich diese Beschickungsöffnung 26 zumindest teilweise verschließen, zu welchem Zweck im gezeigten Ausführungsbeispiel Gurtbänder 25 vorgesehen sind, die sich im Transportfall zwischen den beiden Seitenwandelementen 20 und 22 erstrecken. Anstelle der gezeigten Gurtbänder 25 kann auch eine Plane zum Einsatz kommen.

Um die Beschickungsöffnung 26 freizugeben, sind die Gurtbänder 25 verwenderseitig aus der gezeigten Gebrauchsstellung in eine Nicht-Gebrauchsstellung zu überführen. Zu diesem Zweck sind die Gurtbänder 25 zumindest einendseitig von dem zugehörigen Seitenwandelement 20 bzw. 22 zu lösen.

Gemäß der in den Figuren gezeigten Ausführungsform verfügt ein Seitenwandelement 20, 21 bzw. 22 über zwei Pfosten 7, 8 bzw. 8, 9 bzw. 9, 10 bzw. 10, 11, zwischen welchen Pfosten jeweils ein Flächenelement 12, 13, 14, 15 angeordnet ist. Bei diesem Flächenelement 12, 13, 14, 15 handelt es sich um ein Metallblech, das zumindest teilweise als Lochblech ausgebildet sein kann.

Wie den Figuren des Weiteren zu entnehmen ist, verfügt jedes Seitenwandelement 20, 21 bzw. 22 des Weiteren jeweils über einen Querbalken 23, mit dem das jeweilige Seitenwandelement 20, 21 bzw. 22 oberseitig abschließt.

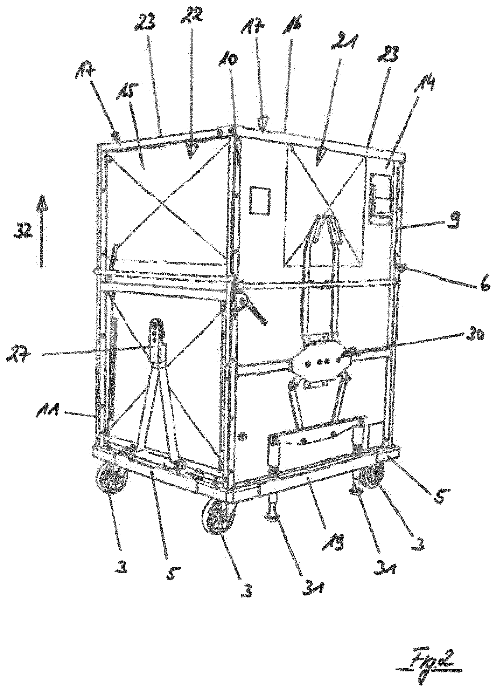

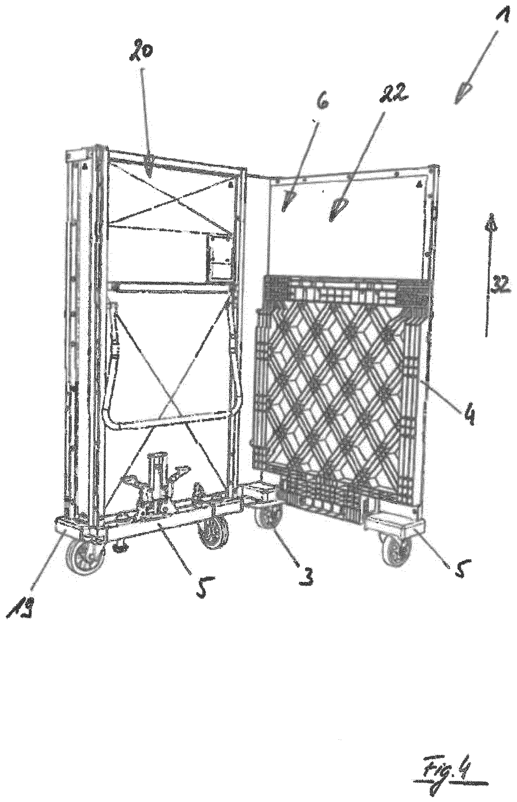

Die in den Figuren gezeigte Konstruktion zeigt einen Rollwagen, der aus einer Gebrauchsstellung in eine Transportstellung überführt werden kann. Dabei ergibt sich die Gebrauchsstellung aus den Fign. 1 und 2 und die Transportstellung aus Fig. 4. Fig. 3 lässt den Rollwagen 1 in einer Zwischenposition erkennen.

Der mit Bezug auf die Zeichnungsebene nach Fig. 1 linke Träger 5 ist verschwenkbeweglich am Holm 19 angeordnet. Dies gestattet es, bei hochgeklapptem Bodenteil 4 das zugehörige Seitenwandelement 20 in Relation zum rückwärtigen Seitenwandelement 21 zu verschwenken. Diese Verschwenkmöglichkeit gestattet es, den Rollwagen 1 in eine Nicht-Gebrauchsstellung zu überführen, in der die Seitenwände 20, 21 und 22 abweichend von einer rechteckförmigen Ausgestaltung L-förmig ausgerichtet sind, wie dies insbesondere Fig. 4 erkennen lässt. In dieser Nicht-Gebrauchsstellung können eine Mehrzahl von Rollwagen 1 ineinander verschachtelt platzsparend aufbewahrt bzw. gelagert werden.

Zur Kopplung mehrerer gleichartig aufgebauter Rollwagen 1 ist stirnseitig des Rollwagens 1 eine Deichsel 27 angeordnet, die mit einer Deichselaufnahme 28 eines anderen Rollwagens 1 zusammenwirkt. Jeder Rollwagen 1 verfügt mithin auf seiner einen Stirnseite über eine Deichsel 27 und auf seiner anderen Stirnseite über eine Deichselaufnahme 28.

Im gezeigten Ausführungsbeispiel befindet sich die Deichselaufnahme 28 an dem Träger 5, der verschwenkbar am Holm 19 angeordnet ist. Um den Träger 5 aus der Gebrauchsstellung beispielsweise nach Fig. 1 in die Nicht-Gebrauchsstellung, d.h. die Transportstellung nach Fig. 4 zu überführen, ist eine die Verdrehbewegung des Trägers 5 relativ gegenüber dem Holm 19 sperrende Rasteinrichtung zu lösen. Deichselaufnahmeseitig verfügt der Rollwagen 1 deshalb über eine entsprechende Entriegelungsmechanik 29, die fußbetätigbar ist.

Um im Belade- bzw. Entladefall des Rollwagens einen sicheren Stand zu gewährleisten, verfügt der Rollwagen 1 holmseitig über Standfüße 31, die mittels einer handbetätigbaren Mechanik 30 ein- bzw. ausgefahren werden können.

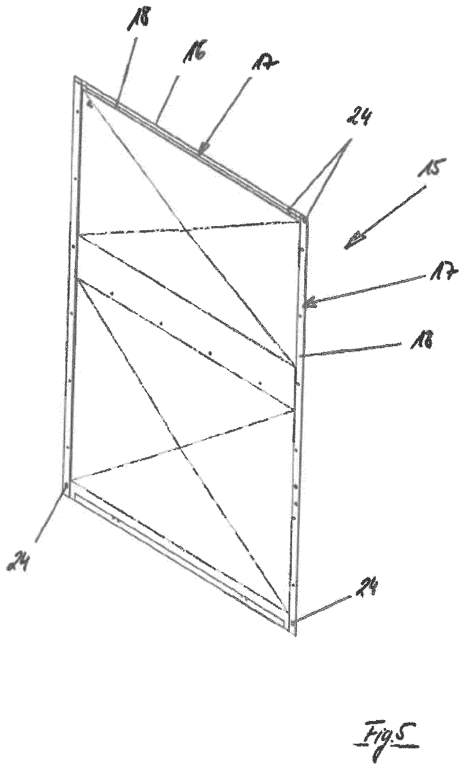

Die Seitenwandelemente 20, 21, 22 verfügen in schon vorbeschriebener Weise unter anderem über ein Flächenelement, das im gezeigten Ausführungsbeispiel aus einem Metallblech gebildet ist. Die weiteren Figuren 5, 6 und 7 lassen dieses Metallblech am Beispiel des Flächenelementes 15 in unterschiedlichen Ansichten erkennen.

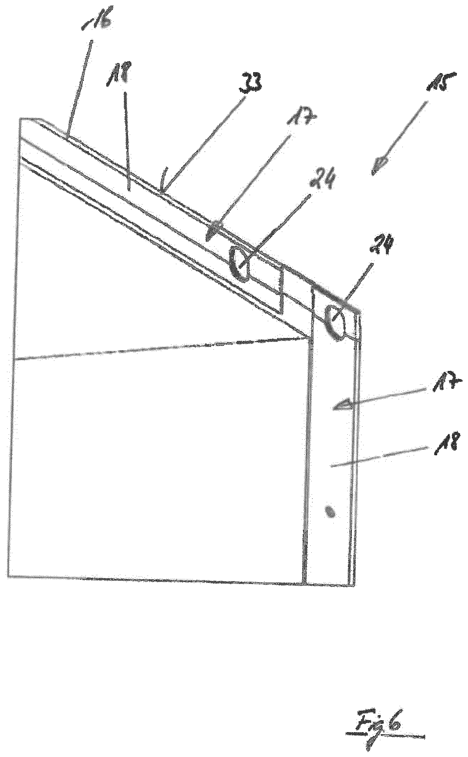

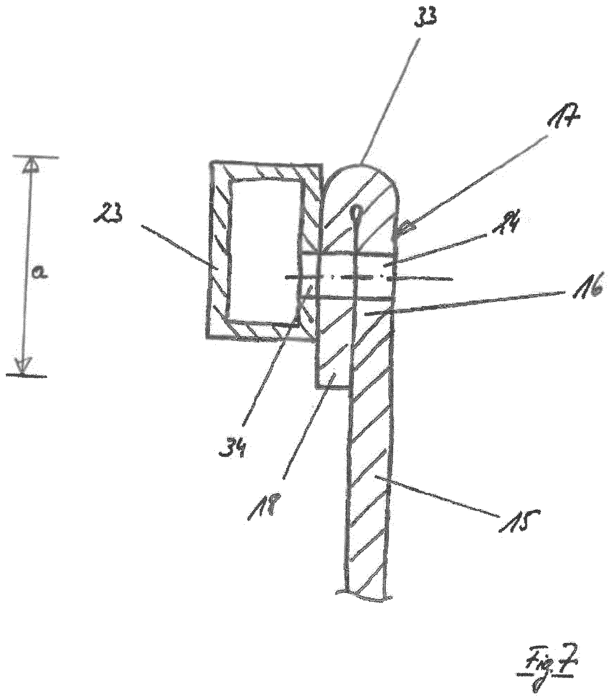

Das Flächenelement 15 ist erfindungsgemäß an seiner der Bodenbaugruppe 2 abgewandten, oberen Randkante 16 mit einem Kantenschutz 17 ausgerüstet. Dieser Kantenschutz 17 ergibt sich durch eine Umkantung 18 des Metallblechs. Dieser Sachzusammenhang ergibt sich insbesondere aus den Figuren 6 und 7, wobei Fig. 7 eine schematische Schnittdarstellung betrifft.

Durch die Abkantung 18 entsteht an der in Höhenrichtung 32 oberen Randkante des Flächenelementes 15 eine abgerundet ausgebildete Abschlusskante 33, wie sich insbesondere aus der Darstellung nach Fig. 7 ergibt. Diese abgerundete Abschlusskante 33 ist aufgrund der Umkantung gratfrei und nicht scharfkantig ausgebildet. Bei verwenderseitigen Übergreifen zur Bestückung des Rollwagens 1 von oben über das zugehörige Seitenwandelement hinweg besteht mithin nicht die Gefahr, dass es bei einem Berührungskontakt mit dem Metallblech zur Abschürfungen oder Schnittverletzungen an einem verwenderseitigen Unterarm, einem verwenderseitigen Handgelenk und/oder einer verwenderseitigen Hand kommt.

Der Randabschnitt 16, über den sich die Umkantung 18 erstreckt, d.h. die Länge, über welche das Flächenelement 15 zweilagig ausgebildet ist, beträgt beispielsweise a = 3 cm bis 5 cm, vorzugsweise 4 cm.

Zur Anordnung des Flächenelementes 15 am zugehörigen Querbalken 23 bzw. den in den Figuren 5 bis 7 nicht gesondert dargestellten Pfosten verfügt das Flächenelement 15 über Bohrungen 24. Korrespondierend hierzu kann der Querträger 23 mit einer Gewindebohrung 34 ausgerüstet sein, was ein Verschrauben von Flächenelement 15 und Querbalken 23 gestattet. Es kann alternativ auch eine Vernietung vorgesehen sein.

Wie insbesondere Fig. 6 erkennen lässt, ist das Flächenelement 15 nicht nur an der oberen Randkante 16 umgekantet ausgebildet. Auch die links- bzw. rechtsseitigen Randkanten sind mit einer entsprechenden Umkantung 18 ausgerüstet, so dass auch insoweit Kantenschutz gegeben ist. Dabei bietet sich die seitenrandkantige Ausgestaltung eines Kantenschutzes insbesondere dann an, wenn das Flächenelement 15 von außen an die zugehörigen Pfosten aufgesetzt ist und mit diesen bündig abschließt. Es werden so scharfkantige Abschlüsse bzw. Übergänge zwischen benachbarten Flächenelementen vermieden.

**Bezugszeichen**

| | | | |
|---|---|---|---|
| 1 | Rollwagen | 32 | Höhenrichtung |
| 2 | Bodenbaugruppe | 33 | obere Abschlusskante |
| 3 | Rollen | 34 | Gewindebohrung |
| 4 | Bodenteil | | |
| 5 | Träger | | |
| 6 | Gestell | | |
| 7 | Pfosten | | |
| 8 | Pfosten | | |
| 9 | Pfosten | | |
| 10 | Pfosten | | |
| 11 | Pfosten | | |
| 12 | Flächenelement | | |
| 13 | Flächenelement | | |
| 14 | Flächenelement | | |
| 15 | Flächenelement | | |
| 16 | obere Randkante | | |
| 17 | Kantenschutz | | |
| 18 | Umkantung | | |
| 19 | Holm | | |
| 20 | Seitenwandelement | | |
| 21 | Seitenwandelement | | |
| 22 | Seitenwandelement | | |
| 23 | Querbalken | | |
| 24 | Bohrung | | |
| 25 | Gurtbänder | | |
| 26 | Beschickungsöffnung | | |
| 27 | Deichsel | | |
| 28 | Deichselaufnahme | | |
| 29 | Mechanik | | |
| 30 | Mechanik | | |
| 31 | Standfuß | | |

## Patentansprüche

1. Rollwagen, insbesondere Rollcontainer, zur Aufnahme von Stückgut, mit einer eine Mehrzahl von Rollen (3) aufweisenden Bodenbaugruppe (2) und einem von der Bodenbaugruppe (2) getragenen Gestell (6), wobei das Gestell (6) zumindest ein Seitenwandelement (20, 21, 22) mit einem aus Metallblech gebildeten Flächenelement (12, 13, 14, 15) aufweist, wobei das Gestell (6) zwei benachbarte und sich jeweils in Höhenrichtung (32) des Rollwagens (1) erstreckende Pfosten (7, 8; 8, 9; 9, 10; 10, 11) aufweist, zwischen denen sich das Flächenelement (12, 13, 14, 15) erstreckt, wobei die Pfosten (7, 8; 8, 9; 9, 10; 10, 11) zusammen mit dem Flächenelement (12, 13, 14, 15) das Seitenwandelement (20, 21, 22) bilden, wobei das Flächenelement (12, 13, 14, 15) an einer der Bodenbaugruppe (2) abgewandten, oberen Randkante (16) mit einem Kantenschutz (17) ausgerüstet ist **dadurch gekennzeichnet,**
**dass** das Flächenelement (12, 13, 14, 15) und der Kantenschutz (17) einstückig ausgebildet sind, wobei der Kantenschutz (17) dadurch ausgebildet ist, dass das Flächenelement (12, 13, 14, 15) umgekantet ausgebildet ist, wobei das Flächenelement (12, 13, 14, 15) einfach umgekantet ist und einen Randabschnitt aufweist, in dem das Flächenelement (12, 13, 14, 15) zweilagig ausgebildet ist, wobei der Randabschnitt bündig mit der oberen Kante der Pfosten (7, 8, 9, 10, 11) und/oder einem zwischen den Pfosten (7, 8, 9, 10, 11) angeordneten Querbalken (23) abschließt.

2. Rollwagen nach Anspruch 1, **dadurch gekennzeichnet, dass** das Flächenelement (12, 13, 14, 15) zweifach umgekantet ist und einen Randabschnitt aufweist, in dem das Flächenelement (12, 13, 14, 15) dreilagig ausgebildet ist.

3. Rollwagen nach Anspruch 1 oder 2, **dadurch gekennzeichnet, dass** der Randabschnitt abgewinkelt ausgebildet ist.

4. Rollwagen nach einem der vorhergehenden Ansprüche, **dadurch gekennzeichnet, dass** der Randabschnitt eine Erstreckung in Höhenrichtung (32) des Flächenelements (12, 13, 14, 15) von 0,5 cm bis 15 cm, vorzugsweise von 1 cm bis 10 cm, noch mehr bevorzugt von 2 cm bis 7 cm sowie am meisten bevorzugt von 3 cm bis 5 cm aufweist.

5. Rollwagen nach einem der vorhergehenden Ansprüche, **dadurch gekennzeichnet, dass** sich der Kantenschutz (17) zumindest abschnittsweise zwischen den beiden Pfosten (7, 8; 8, 9; 9, 10; 10, 11) entlang der oberen Randkante (16) des Flächenelements (12, 13, 14, 15) erstreckt.

## Claims

1. A trolley, in particular a roller container, for receiving piece goods, comprising a bottom module (2) having a plurality of rolls (3) and a framework (6) carried by the bottom module (2), wherein the framework (6) comprises at least one side wall element (20, 21, 22) with a surface element (12, 13, 14, 15) made of sheet metal, wherein the framework (6) comprises two adjacent posts (7, 8; 8, 9; 9, 10; 10, 11) extending each into the direction of height (32) of the trolley (1), between which posts the surface element (12, 13, q14, 15) extends, wherein the posts (7, 8; 8, 9; 9, 10; 10, 11) form the side wall element (20, 21, 22) together with the surface element (12, 13, 14, 15), wherein the surface element (12, 13, 14, 15) is provided with an edge protection (17) on an upper outer edge (16) facing away from the bottom module (2), **characterized in that** the surface element (13, 14, 15, 16) and the edge protection (17) are integrally formed, wherein the edge protection (17) is formed **in that** the edge of the surface element (12, 13, 14, 15) is overturned, wherein the edge of the surface element (12, 13, 14, 15) has been overturned once and the surface element comprises an edge section, in which the surface element (12, 13, 14, 15) is formed with two layers, wherein the edge section fits flush with the upper edge of the posts (7, 8, 9, 10, 11) and/or with a crossbeam (23) arranged between th posts (7, 8, 9, 10, 11).

2. A trolley according to claim 1, **characterized in that** the edge of the surface element (12, 13, 14, 15) is overturned twice and the surface element comprises an edge section, in which the surface element (12, 13, 14, 15) is formed with three layers.

3. A trolley according to claim 1 or 2, **characterized in that** the edge section is configured in an angled manner.

4. A trolley according to one of the preceding claims, **characterized in that** the edge section comprises an extension into the direction of height (32) of the surface element (12, 13, 14, 15) comprised between 0.5 cm and 15 cm, preferably between 1 cm and 10 cm, more preferably between 2 cm and 7 cm as well as most preferably between 3 cm and 5 cm.

5. A trolley according to one of the preceding claims, **characterized in that** the edge protection (17) extends, at least in some sections, between the two posts (7, 8; 8, 9; 9, 10; 10, 11) along the upper outer edge (16) of the surface element (12, 13,14,15).

## Revendications

1. Chariot, notamment conteneur roulant, pour recevoir des marchandises diverses, comprenant un module de fond (2) ayant une pluralité de rouleaux et comprenant un châssis (6) porté par le module de fond (2), dans lequel le châssis (6) comprend au moins un élément de paroi latérale (20, 21, 22) avec un élément de surface (12, 13, 14, 15) formé par une tôle métallique, le châssis (6) comprenant deux poteaux voisins (7,8 ; 8, 9 ; 9, 10 ; 10, 11), qui s'étendent chacun dans la direction de hauteur (32) du chariot (1), et entre lesquels s'étend l'élément de surface (12, 13, 14, 15), les poteaux (7,8 ; 8, 9 ; 9, 10 ; 10, 11) formant ensemble avec l'élément de surface (12, 13, 14, 15) l'élément de paroi latérale (20, 21, 22), l'élément de surface (12, 13, 14, 15) étant muni d'une protection de bord (17) sur un bord marginal supérieur (16) opposé au module de fond (2), **caractérisé en ce que** l'élément de surface (12, 13, 14, 15) et la protection de bord (17) sont réalisés d'un seul tenant, la protection de bord (17) étant formé par le fait que le bord de l'élément de surface (12, 13, 14, 15) est retourné, dans lequel le bord de l'élément de surface (12, 13, 14, 15) est retourné une fois et l'élément de surface (12, 13, 14, 15) comprend une section de bord, dans laquelle l'élément de surface (12, 13, 14, 15) comprend deux couches, la section de bord affleurant avec le bord supérieur des poteaux (7, 8, 9, 10, 11) et/ou avec une poutre transversale (23) disposée entre les poteaux (7, 8, 9, 10, 11).

2. Chariot selon la revendication 1, **caractérisé en ce que** le bord de l'élément de surface (12, 13, 14, 15) est retourné deux fois et l'élément de surface (12, 13, 14, 15) comprend une section de bord, dans laquelle l'élément de surface (12, 13, 14, 15) comprend trois couches.

3. Chariot selon la revendication 1 ou la revendication 2, **caractérisé en ce que** la section de bord est configurée de manière angulaire.

4. Chariot selon l'une des revendications précédentes, **caractérisé en ce que** la section de bord comprend une extension dans la direction de hauteur (32) de l'élément de surface (12, 13, 14, 15) comprise entre 0,5 cm et 15 cm, de préférence entre 1 cm et 10 cm, de préférence particulière entre 2 cm et 7 cm ainsi que de préférence la plus particulière entre 3 cm et 5 cm.

5. Chariot selon l'une des revendications précédentes, **caractérisé en ce que** la protection de bord (17) s'étend, au moins dans plusieurs sections, entre les deux poteaux (7,8 ; 8, 9 ; 9, 10 ; 10, 11) le long du bord marginal supérieur (16) de l'élément de surface (12, 13, 14, 15).
